**Europäisches Patentamt**

(19) **European Patent Office**

**Office européen des brevets**

(11) Publication number : **0 357 420 B1**

(12) # EUROPEAN PATENT SPECIFICATION

(45) Date of publication of patent specification :
**11.11.92 Bulletin 92/46**

(51) Int. Cl.⁵ : **F16K 15/02**

(21) Application number : **89308811.2**

(22) Date of filing : **31.08.89**

(54) **Non-return valve.**

(30) Priority : **01.09.88 US 239557**
**14.08.89 US 392888**

(43) Date of publication of application :
**07.03.90 Bulletin 90/10**

(45) Publication of the grant of the patent :
**11.11.92 Bulletin 92/46**

(84) Designated Contracting States :
**BE DE FR GB IT NL**

(56) References cited :
**US-A- 2 353 751**
**US-A- 3 749 123**
**US-A- 3 792 718**
**US-A- 3 830 255**
**US-A- 4 062 378**
**US-A- 4 637 430**

(73) Proprietor : **NUPRO COMPANY**
**4800 East 345 Street**
**Willoughby Ohio 44094 (US)**

(72) Inventor : **Gausman, Theodore J.**
**8060 Deepwood Blvd Apartment B-24**
**Mentor Ohio 44060 (US)**
Inventor : **Scheffel, Gary W.**
**8384 State Route 43**
**Streetsboro Ohio 44240 (US)**

(74) Representative : **Jones, Colin et al**
**W.P. THOMPSON & CO. Coopers Building**
**Church Street**
**Liverpool L1 3AB (GB)**

## Description

The invention pertains to valves, and more particularly to an improved check or non-return valve.

The invention is particularly applicable to a valve that is extremely sensitive to low cracking pressures and will be described with particular reference thereto; however, the invention can be incorporated in other environments and operable under a variety of pressure conditions.

Prior check valve arrangements are not deemed to be sufficiently sensitive to small differential pressures, i.e., cracking pressures, for regulating fluid flow. Specifically, known valve element and biasing arrangements are believed to be insensitive to slight pressure variations on the order of 0.023 to 0.136 bar (1/3 (one-third) to 2 (two) psi). Use of helical springs to bias a valve element towards a closed position is well known in the art (US-A- 4637430). Unfortunately, helical springs can potentially contaminate the fluid system. Additionally, the biasing force of a helical spring tends to cock the valve element and impose eccentric loads that effect performance of the valve.

Although disc-type springs have been considered in other environments, these springs were not believed to be particularly useful in many situations since the valve structure must be altered to accommodate fluid flow past the disc spring. For example, enlarged, spaced openings were formed in the disc spring to define flow passages therethrough. This, in turn, altered the biasing force and sensitivity of the valve arrangement to low cracking pressures. Alternatively, an imperforate annular disc spring was utilized in which an outer diameter portion was secured to the valve body and an inner diameter portion to the valve element. Since the disc spring was imperforate, it was necessary to define a separate flow passage through the valve element. This was not considered particularly desirable since the valve element was, by necessity, of reduced size and, therefore, the surface areas on which the fluid pressure acted were correspondingly reduced. If the valve element was increased in size, the overall valve body and spring also necessitated a change in dimension.

US-A-3 830 255 describes a check valve of the kind comprising first and second body portions which define a valve chamber and which respectively have an inlet to the valve chamber and an outlet from the valve chamber; a valve element received in the valve chamber for movement in response to pressure differentials across the valve; a spring for urging the valve element towards a closed position; and a stop member located in the valve chamber, wherein opening movement of the valve element is limited and wherein the spring is interposed between the valve element and the stop member with a radially inner portion of the spring located against the stop member and a radially outer portion of the spring located against the valve element.

The spring of the valve of US-A-3 830 255 is a conical spring having its wide end seated against the valve element and its narrow end seated on the stop member. In the valve-open state, the spring is illustrated as being fully compressed. The outlet from the valve chamber is provided by peripheral windows in the second body portion which is in the form of a cage.

An object of the present invention is to provide a new and improved check valve to overcome the above referred to problems and others and to provide an arrangement which is particularly sensitive to low cracking pressures in a simplified, econonical arrangement.

US-A-3 749 123 shows a check valve whose valve element is biased to its closed position by a flattish "finger spring". Radially inner portions of the latter engage the valve element.

According to the present invention, a check valve of the above-described kind is characterised in that the spring is in the form of a annular disc which guides the valve element for axial movement and which has spiral slots between its inner and outer portions, and in that the stop member has a central region defining a stop surface for engagement by the valve element to limit the latter's opening movement.

The stop member preferably has an axially raised central portion which defines the stop surface for engaging the valve element and limiting its opening movement.

Preferably an axially extending rim is defined on a peripheral portion of the valve element for securing the guide member thereto. The axial dimension of the rim is advantageously less than the axial extent of the raised portion of the stop member so as to define a flow passage therebetween when the valve element engages the stop member.

According to a still further preferred feature of the invention the valve body comprises first and second body portions welded together along an interface region and the stop member is welded to the body portions.

One advantage of the invention is the sensitivity of the check valve to low cracking pressures.

Another advantage of the invention resides in the limited stroke of the valve element between open and closed positions.

Still another advantage of the invention is found in the annular disc that applies a stable, linear biasing force to the valve element to promote precise seating of the valve element.

The invention is further described, by way of example, with reference to the accompanying drawings, wherein:

Fig.1 is a perspective exploded view of a check valve according to one embodiment of the invention,

Fig.2 is a longitudinal sectional view of the valve prior to welding together first and second body portions with a stop member, and representing a valve element in a closed position;

Fig.3 illustrates a completely assembled check valve in a valve-open position;

Fig.4 is an enlarged detail view of the encircled area of Fig.2 particularly illustrating interconnection of a seal member with the valve element;

Fig.5 is an enlarged detail view, similar to Fig.4 of a first alternative seal member construction and manner of securing same to the valve element;

Fig.6 is an enlarged detail view, similar to Fig.4 of a second alternative seal member construction and manner of securing same to the valve element; and

Fig.7 is an enlarged detail view, similar to Fig.4 of a third alternative seal member construction and manner of securing same to the valve element.

Referring now to the drawings, a check valve A has a valve body B defining an enclosed cavity or chamber C. Received within the chamber C are three major components comprising a valve element D, stop member E and guide member or disc F.

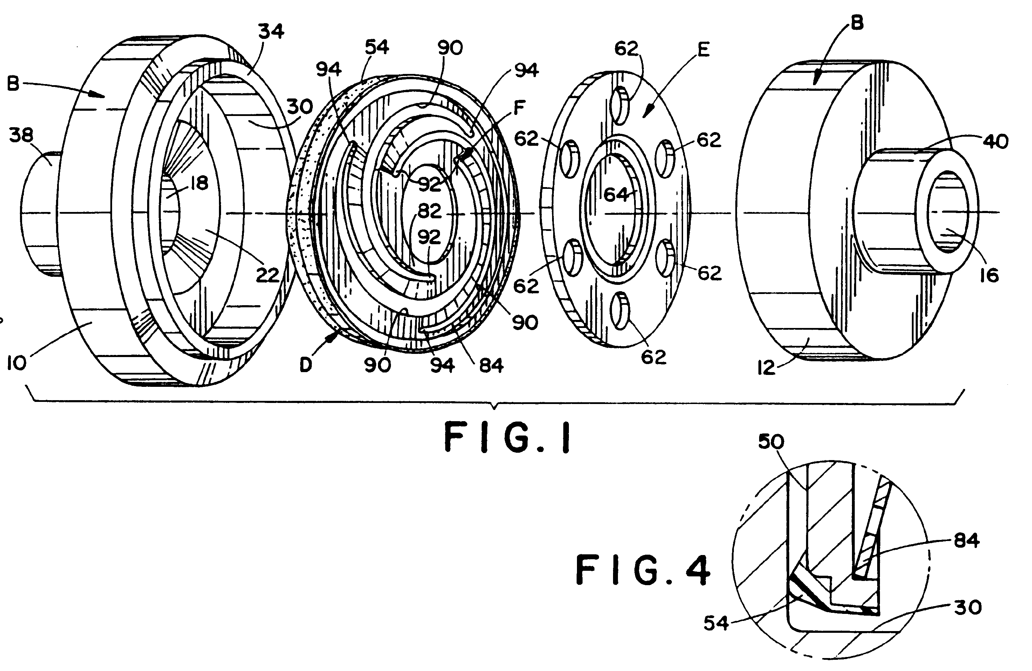

More particularly, and with reference to Figs. 1 to 3, the valve body B comprises first and second body portions 10,12, also referred to as the inlet and outlet body portions, respectively. Accordingly, the first or inlet body portion 10 has an inlet passage 14 and the second or outlet body portion 12 has an outlet passage 16. The inlet and outlet passages 14,16 are preferably defined by axially extending bores that have respective tapered counterbores 18,20 that increase in diameter as they extend from the bores and merge into more widely diverging, tapering regions 22,24. Each body portion 10,12 includes a substantially constant diameter recess 30,32 which together define the chamber C when the body portions are brought into mating engagement. Specifically, end faces 34,36 of the body portions are welded together as will be described further below.

The inlet and outlet passages 14,16 are defined in reduced diameter, substantially cylindrical portions 38,40. These cylindrical portions may be connected to tubular members or fluid passages of a fluid system in any well known manner. For example, the cylindrical portions 38,40 may be externally threaded to receive a nut and ferrule arrangement or internally threaded to receive threaded pipe ends. Yet another conventional means of connecting is to weld an end face of the cylindrical portion 38 or 40 to a tubular member of a fluid system. Any of these connecting arrangements can be used with equal success and without departing from the scope of the invention. In some arrangements, it may be desirable to provide tool or wrench flats 42 on one of the body portions 10,12 to facilitate make up and interconnection of the check valve A into an associated fluid system.

The valve element D received in the valve chamber C, comprises an enlarged diameter substantially circular, disc-like member having opposed first and second faces 50,52. The first or one face 50 is disposed upstream in facing relation with the inlet passage 14. Likewise, the second face 52 is disposed downstream in generally facing relation with the outlet passage 16. An annualar, elastomeric seal member 54 is secured to the valve element D. Preferably the seal member 54 is bonded to the first face 50 of the valve element substantially as described in US-A- 4 637,430. As illustrated, the seal member 54 is bonded to the first face 50 and according to a preferred arrangement is also bonded to the periphery of the valve element D, i.e., along an axial surface thereof. In other arrangements, the seal member is bonded only on the first face in a manner more akin to that of the patent noted above.

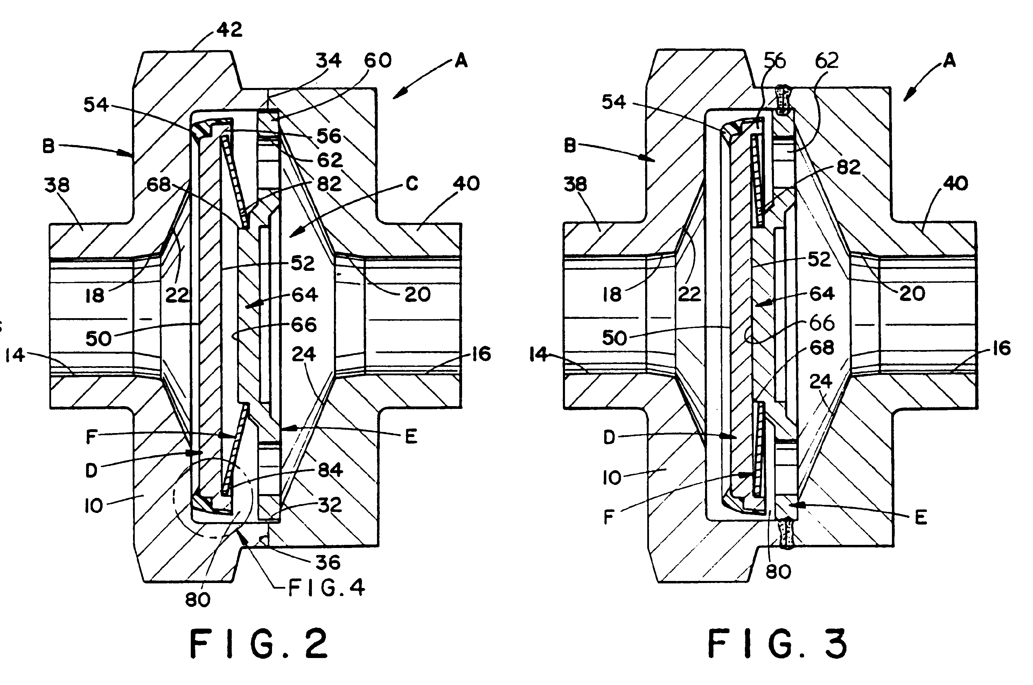

The seal member is received along a radially outer region of the first face (Fig.4) and adapted to selectively engage a radially extending face of recess 30 of the first body portion 10. This radially extending face defines a valve seat. In this manner, and as particularly illustrated in Fig.2, the seal member 54 engages the valve seat along an annular area at a diameter substantially greater than that of inlet passage 14. As shown, the valve seat area has a greater diameter than the maximum dimension of steeply tapering region 22. This dimensional relationship presents an enlarged surface area of the disc on which inlet fluid pressure may act to increase sensitivity of the check valve at low cracking pressures.

The second face 52 of the valve element D has a rim 56 along the outer periphery of the element. The rim 56 is preferably circumferentially continuous and extends substantially axially outwardly from the second face 52 towards the outlet passage 16. The rim 56 is adapted to orient and maintain engagement with the guide member F. The guide member F may also be tack-welded to the second face 52 of the valve element adjacent the rim 56.

The stop member E comprises a substantially flat, disc-shaped member and has an outer peripheral portion 60 closely received in recesses 30,32 of the body portions. Particularly, the outer peripheral portion 60 has an axial dimension sufficient to provide engagement with both of the recesses 30,32 for reasons which will become more apparent below. Spaced openings 62 are located adjacent the outer periphery to define passage means that provides a continuous flow path for fluid through the stop member in a valve-open condition. A central region 64 of the stop member E has an axially raised portion 66 which defines a step or ledge 68 for receiving a radially inner portion of the guide member F. Specifically, the raised portion 66 extends axially towards the inlet passage 14 by a substantial dimension beyond the remainder of the upstream face of the stop member E and defines a stop surface adapted to engage the second face 52 of the valve element. This abutting engagement defines the axial limit of the opening movement of the valve element D resulting from a predetermined pressure differential. That is, if pressure in the inlet passage 14 is greater than that in the outlet passage 16 and the slight biasing force imposed by the guide member F, the force exerted on the first face 50 of the valve element D will urge the valve element towards engagement with the stop surface.

In the valve-open position as illustrated in Fig.3, the axial extent of the rim 56 is less than the dimension of the raised portion 66 extending axially outwardly from the remainder of the stop member E. This relatinship assures that, even though abutting engagement occurs between the second face 52 of the valve element and the central portion 66 of the stop member E, a fluid passage 80 is still defined around the valve element D, radially inwardly to openings 62, and axially therethrough to the outlet passage 16.

The guide member F comprises an annular, wafer or disc which urges the valve element D to a closed position as illustrated in Fig.2. An inner radial or central portion 82 of the guide member F is closely received on the step 68 of the stop member and may, if desired, be tack-welded thereto to provide a secure engagement. An outer peripheral portion 84 of the guide member F is radially contained by rim 56 of the valve element D and may also be suitaby tack-welded to the valve element to ensure secure engagement therewith. For selected applications, the mere physical engagement of the guide member F with rim 56 at the outer periphery and with step 68 at the inner periphery provides a suitable connection so that tack-welding may not be necessary at these regions.

The guide member F has first, second and third slots 90 (Fig.1) which each extend in a continuous increasing spiral. A radially innermost end 92 of each slot is disposed adjacent the central portion 82 of the guide member and a radially outermost end 94 of each slot lies adjacent the circumferentially continuous peripheral portion 84. The slots are angularly spaced approximately 120° apart to provide a balanced biasing on the valve element D.

A comparison of Figs. 2 and 3 illustrates that the valve element D undergoes an extremely limited stroke between its open and closed positions. For example, the stroke is in the range of 0.800 mm (0.0315 inch) between its open and closed positions. Due to the structural configuration of the annular guide member F, an equally distributed biasing force is imposed on the valve element D to ensure linear movement of the valve element between its open and closed positions. This, in turn, provides for proper seating of the seal member 54 with the valve seat. The guide member F maintains the valve element D in a centered position and exerts a slight, controlled biasing force on the valve element responsive to low cracking pressures approximating 0.023 to 0.136 bar (1/3 (one-third) to 2 (two) psi. With minimal variations between inlet and outlet pressure, the force exerted by the guide member F is overcome and the valve element D moves to an open position. Increasing the inlet pressure will cause the valve element to stroke to a full open position in which the second face 52 abuttingly engages the raised central portion 66 of the stop member E.

According to a preferred manner of construction, the valve element D, stop member E, and guide member F are disposed within recess 30 of the first body portion 10. The second body portion 12 is then aligned therewith; specifically recess 32 is aligned with recess 30 of the first body portion. The biasing force of the guide member F holds the stop member E against the second body portion 12 until the valve body B is circumferentially welded. Preferably, an electron beam weld is used since conventional welding techniques may produce excessive heat levels and adversely affect the elastomeric material of the seal member 54. Since the stop member E is received axially in both recesses 30,33 at an interface region defined by the abutting end faces 34,36 of the body portions 10,12, the electron beam weld that secures the body portions together also penetrates radially inwardly to secure the stop member E in place (Fig.3). This assures an integral or unitary structure in which the valve element D forms a floating component urged to a closed position by the guide member F.

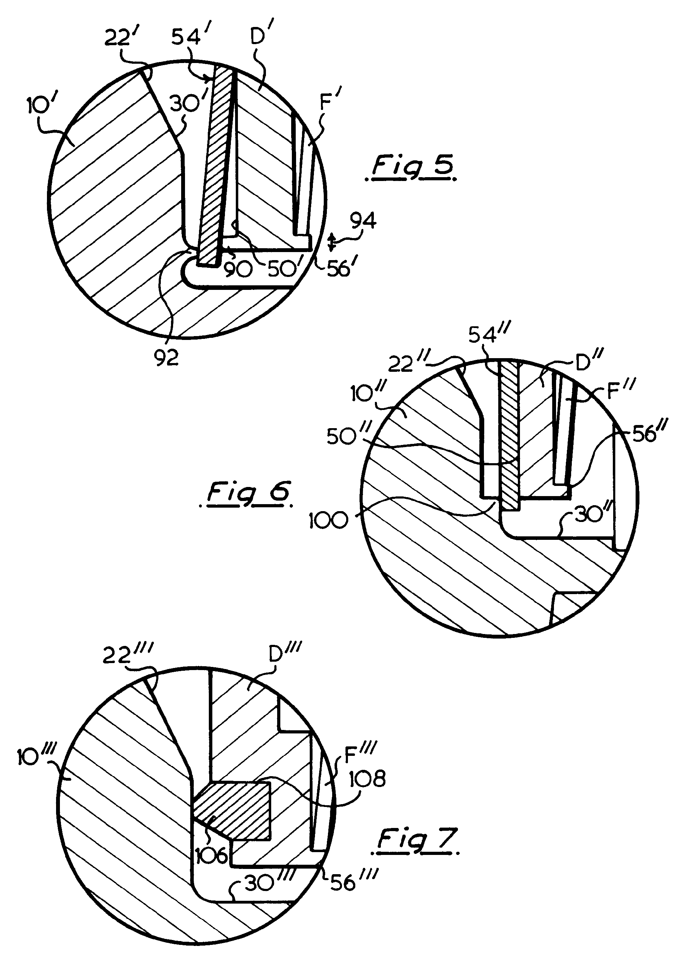

Figs. 5 to 7 illustrate three alternative embodiments of the seal member 54. For purposes of brevity and ease of understanding, like parts will be identified by like numerals with primed suffixes (', ", '") while new elements will be identified by new numerals. Further, unless specifically noted otherwise, the structure and operation of the remainder of the check valve is substantially the same.

According to the first alternative embodiment of Fig.5, the seal member 54' is defined as an enlarged elastomeric annulus of approximately the same diameter as the guide member F'. Means for securing the seal member to the first face 50' of the valve element must be provided. For example, the valve element D' can be modified so that it is in some respects substantially the same as the stop member, i.e., through provision of a centrally raised portion, to which an inner diameter portion of the seal member 54' can be secured. Still other securing arrangements can be utilized, as well as other structural configurations for the seal member, without departing from the scope of the invention.

The valve element D' is suitably modified by formation of a circumferentially continuous raised bead 90 along the outer peripheral portion thereof. The bead 90 co-operates with a similar bead 92 extending axially outwardly from the recess 30'. Thus, the bead 92 defines a circumferentially continuous valve seat for regulating fluid flow through the valve. Due to its elastomeric nature, the seal member 54′ is adapted to flex along an area spaced radially inwardly from the beads 90,92. Further, the beads may be radially aligned or, for selected other applications, the beads may be radially offset as represented by arrow 94.

Referring now to Fig.6, in the second alternative embodiment, the seal member 54″ is again an elastomeric annulus which is preferably secured to the valve element D″ along a central portion. The first face 50″ is substantially planar so that the seal member 54″ lies flat against it. The raised bead extending from the valve body in the Fig.5 arrangement is replaced by a raised shelf or shoulder 100. The raised shelf 100 gradually merges into the recess 30″ at an area disposed radially outwardly from the valve seat.

Lastly, and as shown in Fig.7, the third embodiment of seal member includes a bonded poppet 106. A groove 108 closely receives the poppet 106 therein. In a manner substantially the same as described above with respect to the Fig.1 embodiment, the seal member 54‴ is bonded to the valve element D‴. The poppet again utilizes a V-shaped cross-sectional configuration to define a limited area of contact with the recess 30‴.

**Claims**

1. A check valve comprising first and second body portions (10,12) which define a valve chamber (C) and which respectively have an inlet (14) to the valve chamber (C) and an outlet (16) from the valve chamber; a valve element (D) received in the valve chamber (C) for movement in response to pressure differentials across the valve; a spring (F) for urging the valve element (D) towards a closed position; and a stop member (E) located in the valve chamber (C); wherein opening movement of the valve element (D) is limited and wherein the spring (F) is interposed between the valve element (D) and the stop member (E) with a radially inner portion (82) of the spring (F) located against the stop member (E) and a radially outer portion (84) of the spring (F) located against the valve element (D); characterised in that the spring (F) is in the form of an annular disc which guides the valve element (D) for axial movement and which has spiral slots (90) between its inner and outer portions (82,84), and in that the stop member (E) has a central region (64) defining a stop surface for engagement by the valve element (D) to limit the latter's opening movement.

2. A check valve as claimed in claim 1, wherein said stop member (E) is received in said valve chamber (C) at an interface region of said first and second body portions (10,12), and is integrally welded to said body portions.

3. A check valve as claimed in claim 1 or 2, wherein an elastomeric sealing member (54) is disposed on one face (50) of the valve element (D) and is arranged to engage sealingly around said inlet (14).

4. A check valve as claimed in claim 3, wherein the outer portion (84) of said guide disc (F) is secured to a second face (52) of said valve element (D) disposed oppositely to said one face (50).

5. A check valve as claimed in claim 3 or 4, wherein said elastomeric sealing member (54) is disposed along a peripheral portion of said one face (50) of the valve element.

6. A check valve as claimed in claim 3 or 4, wherein said elastomeric sealing member (54′) is received between first and second beads (90,92) on said one face (50) of the valve element and one of the body portions (10,12), respectively.

7. A check valve as claimed in claim 6, wherein said beads (90,92) are axially aligned.

8. A check valve as claimed in claim 3 or 4, wherein said elastomeric sealing member (106) is secured in a groove (108) defined in said one face of the valve element.

9. A check valve as claimed in claim 3, 4, 5 or 8, wherein said seal member (54;106) is bonded to said valve element (D) along a peripheral portion thereof.

10. A check valve as claimed in any of claims 3 to 9, wherein the elastomeric sealing member (54;106) is approximately the same size as the guide disc (F).

11. A check valve as claimed in claim 10, further comprising a valve seat defined by a raised member (100) extending axially outward from the first body portion (10).

12. A check valve as claimed in any of claims 1 to 11, wherein said stop member (E) has passage means (62) extending axially therethrough to permit fluid flow from said inlet (14) to said outlet (16).

13. A check valve as claimed in claim 12, wherein said stop member (E) has a stepped configuration defined by an axially raised central portion (66) receiving said radially inner portion (82) of said guide disc (F) and a peripheral portion (60) in which are said passage means (62).

14. A check valve as claimed in any of claims 1 to 12, wherein said stop member (E) has an axially raised central portion (66) for selective engagement with said valve element (D).

15. A check valve as claimed in claim 13 or 14, wherein said valve element (D) has a circumferential rim (56) for securing the outer portion (84) of said guide disc (F) thereto, said rim (56) extending axially by a dimension less than the axial dimension of said central portion (66) of said stop member (E) to define a flow passage (80) between said valve element (D) and said stop member (E) in the valve-open position.

16. A check valve as claimed in any of claims 1 to 15, wherein the effective surface area of said valve element (D) is substantially larger than the cross-sectional area of said inlet passage (14), whereby said valve element is sensitive to low inlet pressures.

**Patentansprüche**

1. Rückschlagventil, aufweisend erste und zweite Gehäuseteile (10,12), welche eine Ventilkammer (C) ausbilden und welche jeweils einen Einlaß (14) zur Ventilkammer (C) und einen Auslaß (16) von der Ventilkammer (C) haben; ein Ventilelement (D), welches zur Bewegung infolge von Druckdifferenzen über dem Ventil, in der Ventilkammer (C) aufgenommen ist; eine Feder (F), um das Ventilelement in eine Schließstellung zu zwingen; und ein Anschlagglied (E), welches in der Ventilkammer (C) angeordnet ist; wodurch die Öffnungsbewegung des Ventilelementes (D) begrenzt ist und wodurch die Feder (F) zwischen dem Ventilelement (C) und dem Anschlagglied (E) eingesetzt ist mit einem radial inneren Teil (82) der Feder (F), welcher gegen das Anschlagglied (E) anliegt, und einem radial äußeren Teil (84) der Feder (F), welcher gegen das Ventilelement (D) anliegt; dadurch gekennzeichnet, daß die Feder (F) die Form einer ringförmigen Scheibe aufweist, welche das Ventilelement (D) zur axialen Bewegung führt und welche spiralförmige Schlitze (90) zwischen ihrem inneren und äußeren Teil (82,84) hat, und daß das Anschlagglied (E) einen zentralen Bereich (64) hat, welcher eine Anschlagfläche ausbildet zur Beaufschlagung durch das Ventilelement (D), um die Öffnungsbewegung des letzteren zu begrenzen.

2. Rückschlagventil gemäß Anspruch 1, wobei das Anschlagglied (E) in der Ventilkammer (C) in einem Übergangsbereich zwischen dem ersten und zweiten Gehäuseteil (10,12) aufgenommen ist und vollständig mit den Gehäuseteilen verschweißt ist.

3. Rückschlagventil nach Anspruch 1 oder 2, wobei ein elastomeres Dichtungsglied (54) auf der einen Seite (50) des Ventilelementes (D) vorgesehen ist und zur dichtenden Beaufschlagung um den Einlaß (14) angeordnet ist.

4. Rückschlagventil gemäß Anspruch 3, wobei der äußere Teil (84) der Führungsscheibe (F) an der zweiten Seite des Ventilelementes (D), welche gegenüberliegend zur ersten Seite (50) angeordnet ist, gesichert ist.

5. Rückschlagventil nach einem der Ansprüche 3 oder 4, wobei das elastomere Dichtungsglied (54) entlang eines äußeren Teiles der ersten Seite (50) des Ventilelementes vorgesehen ist.

6. Rückschlagventil nach einem der Ansprüche 3 oder 4, wobei das elastomere Dichtungselement (54') zwischen ersten und zweiten Kränzen (90,92) auf der einen Seite (50) des Ventilelementes und jeweils einem der Gehäuseteile (10,12) aufgenommen ist.

7. Rückschlagventil gemäß Anspruch 6, wobei die Kränze (90,92) axial fluchten.

8. Rückschlagventil gemäß Anspruch 3 oder 4, wobei das elastomere Dichtungsglied (106) in einer Nut (108) festliegt, welche von der einen Seite des Ventilelementes ausgebildet ist.

9. Rückschlagventil gemäß Anspruch 3,4,5 oder 8, wobei das Dichtungsglied (54, 106) entlang eines das Ventilelement (E) umgebenden Teils befestigt ist.

10. Rückschlagventil gemäß einem der Ansprüche 3 - 9, wobei das elastomere Dichtungsglied (54, 106) ungefähr die gleiche Größe aufweist, wie die Führungsscheibe (F).

11. Rückschlagventil gemäß Anspruch 10, welches weiterhin einen Ventilsitz aufweist, welcher von einem erhöhten Glied (100) ausgebildet ist, welches sich axial auswärts aus dem ersten Gehäuseteil (10) fortsetzt.

12. Rückschlagventil gemäß einem der Ansprüche 1 - 11, wobei das Anschlagglied (E) Durchgangsmittel (62) hat, welche sich axial durchgängig erstrecken, um einen Flüssigkeitsstrom vom Einlaß (14) zum Auslaß (16) zu ermöglichen.

**13.** Rückschlagventil gemäß Anspruch 12, wobei das Anschlagglied (E) eine gestufte Ausgestaltung ausbildet durch einen axial erhöhten zentralen Teil (66), welcher den kreisförmigen inneren Teil (82) der Führungsscheibe (F) aufnimmt und einen umgebenden Teil (60), in welchem die Durchgangsmittel (62) sind.

**14.** Rückschlagventil nach einem der Ansprüche 1 - 12, wobei das Anschlagglied (E) einen axial erhöhten zentralen Bereich (66) aufweist zur selektiven Beaufschlagung durch das Ventilelement (D).

**15.** Rückschlagventil nach Anspruch 13 oder 14, wobei das Ventilelement (D) einen umgebenden Rand (56) aufweist, um den äußeren Teil (84) der Führungsscheibe (F) darin festzulegen, wobei der Rand (56) sich in axialer Richtung erstreckt, um eine Dimension kleiner als die axiale Dimension des zentralen Teils (66) des Anschlaggliedes (E), um eine Durchflußöffnung (80) auszubilden zwischen dem Ventilelement (D) und dem Anschlagglied (E) in der Ventil-Öffnungsstellung.

**16.** Rückschlagventil nach einem der Ansprüche 1 - 15, wobei das effektive Oberflächengebiet des Ventilelementes D wesentlich größer ist als das Querschnittsgebiet des Einlaß-Durchtrittes 14, wobei das Ventilelement feinfühlig für kleine Einlaßdrücke ist.

**Revendications**

**1.** Clapet de non-retour comprenant une première et une seconde parties de corps (10, 12), qui définissent une chambre de clapet (C) et qui présentent respectivement une entrée (14) à la chambre de clapet (C) et une sortie (16) de cette dernière; un élément de clapet (D) logé dans la chambre de clapet (C) pour permettre un déplacement en réponse à des différences de pression s'exerçant sur le clapet; un ressort (F) pour rappeler l'élément de clapet (D) vers une position fermée; et un organe d'arrêt (E) situé dans la chambre de clapet (C); dans lequel un mouvement d'ouverture de l'élément de clapet (D) est limité et dans lequel le ressort (F) est interposé entre l'élément de clapet (D) et l'organe d'arrêt (E), une partie radialement interne (82) du ressort (F) étant située contre l'organe d'arrêt (E), et une partie radialement externe (84) du ressort (F) étant située contre l'élément de clapet (D); caractérisé en ce que le ressort (F) se présente sous la forme d'un disque annulaire qui guide l'élément de clapet (D) en déplacement axial, et qui présente des fentes spirales (90), entre ses parties interne et externe (82, 84), et en ce que l'organe d'arrêt (E) présente une zone centrale (64) définissant une surface d'arrêt destinée à être mise en contact de l'élément de clapet (D), pour limiter son mouvement d'ouverture.

**2.** Clapet de non-retour selon la revendication 1, dans lequel ledit organe d'arrêt (E) est logé dans ladite chambre de clapet (C), sur une zone d'interface desdites première et seconde parties de corps (10, 12), et est soudé d'un seul tenant auxdites parties de corps.

**3.** Clapet de non-retour selon la revendication 1 ou 2, dans lequel un organe d'étanchéité élastomère (54) est disposé sur une face (50) de l'élément de clapet (D), et est agencé pour venir en contact étanche autour de la périphérie de ladite entrée (14).

**4.** Clapet de non-retour selon la revendication 3, dans lequel la partie externe (84) dudit disque de guidage (F) est fixée à une seconde face (52) dudit élément de clapet (D), disposé à l'opposé de ladite face (50).

**5.** Clapet de non-retour selon la revendication 3 ou 4, dans lequel ledit organe d'étanchéité élastomère (54) est disposé le long d'une partie périphérique de ladite face (50) de l'élément de clapet.

**6.** Clapet de non-retour selon la revendication 3 ou 4, dans lequel ledit organe d'étanchéité élastomère (54') est logé entre une première et une seconde moulure (90, 82), respectivement sur ladite face (50) de l'élément de clapet et l'une des parties de corps (10, 12).

**7.** Clapet de non-retour selon la revendication 6, dans lequel lesdites moulures (90, 82) sont alignées axialement.

**8.** Clapet de non-retour selon la revendication 3 ou 4, dans lequel ledit organe d'étanchéité élastomère (106) est fixé dans une rainure (108) définie dans ladite face de l'élément de clapet.

**9.** Clapet de non-retour selon la revendication 3, 4, 5 ou 8, dans lequel ledit organe d'étanchéité (54; 106) est lié audit élément de clapet (D), le long d'une partie périphérique de ce dernier.

**10.** Clapet de non-retour selon l'une quelconque des revendications 3 à 9, dans lequel l'organe d'étanchéité élastomère (54; 106) est approximativement de la même taille que le disque de guidage (F).

**11.** Clapet de non-retour selon la revendication 10, comprenant en outre un siège de clapet défini par un élément surélevé (100), s'étendant axialement vers l'extérieur de la première partie de corps (10).

**12.** Clapet de non-retour selon l'une quelconque des revendications 1 à 11, dans lequel ledit organe d'arrêt (E) présente un moyen de passage (62) s'étendant axialement en son sein, pour permettre un écoulement de fluide, de ladite entrée (14) à ladite sortie (16).

**13.** Clapet de non-retour selon la revendication 12, dans lequel ledit organe d'arrêt (E) présente une configuration étagée définie par une partie centrale (66) axialement surélevée, logeant ladite partie radialement interne (82) dudit disque de guidage (F), et une partie périphérique (60) dans laquelle se situe ledit moyen de passage (62).

**14.** Clapet de non-retour selon l'une quelconque des revendications 1 à 12, dans lequel ledit organe d'arrêt (E) présente une partie centrale (66) axialement surélevée pour venir en contact sélectif avec ledit élément de clapet (D).

**15.** Clapet de non-retour selon la revendication 13 ou 14, dans lequel ledit élément de clapet (D) présente un rebord circonférentiel (56), pour permettre la fixation de la partie externe (84) dudit disque de guidage (F) à ce dernier, ledit rebord (56) s'étendant axialement, d'une valeur inférieure à la dimension axiale de ladite partie centrale (66) dudit organe d'arrêt (E), pour définir un passage d'écoulement (80) entre l'élément de clapet (D) et ledit organe d'arrêt (E), situé dans la position de clapet ouvert.

**16.** Clapet de non-retour selon l'une quelconque des revendications 1 à 15, dans lequel la zone de surface efficace dudit élément de clapet (D) est sensiblement supérieure à la zone de section transversale dudit passage d'entrée (14), de manière que ledit élément de clapet soit sensible à de faibles pressions d'admission.

FIG.1

FIG.4

EP 0 357 420 B1

FIG. 2

FIG. 3

EP 0 357 420 B1

_Fig_5_.

_Fig_6_.

_Fig_7_.